Europäisches Patentamt

European Patent Office

Office européen des brevets

(19)

(11) Publication number: **0 110 474**
A1

(12) **EUROPEAN PATENT APPLICATION**

(21) Application number: 83201663.8

(22) Date of filing: 23.11.83

(51) Int. Cl.³: **B 62 D 49/06,** B 62 D 49/02,
B 60 K 17/28

(30) Priority: 24.11.82 NL 8204564

(71) Applicant: Texas Industries Inc., 15 Pietermaai,
Willemstad Curaçao Netherlands Antilles (NL)

(43) Date of publication of application: 13.06.84
Bulletin 84/24

(72) Inventor: van der Lely, Cornelis, 7 Brüschenrain, Zug
(CH)

(74) Representative: Mulder, Herman et al, Octrooibureau
Van der Lely N.V. 10 Weverskade P.O. Box 26,
NL-3155 ZG Maasland (NL)

(84) Designated Contracting States: IT

(54) Tractor or similar vehicle.

㊼ A tractor or similar vehicle, particular intended for use in agriculture, comprising a front axle (7) provided with two steerable wheels and drive means (55–57) for driving said front wheels. The front wheels being pivotable about swivel axes (43, 44) extending at an angle to the vertical. Power take-off shafts (87, 96) being prov ided near the front axle (7), whereby one of said power take-off shafts (96) is drivable in dependency of the speed of the tractor engine whereas the other power take-off shaft (87) is drivable in dependency of the travelling speed of the tractor.

Tractor or similar vehicle.

The invention relates to a tractor or a similar vehicle, particularly intended for use in agriculture, comprising a front axle with two steerable wheels.

According to the invention the front axle comprises driving means for driving the two steerable wheels and is located at a distance above the ground which is at least equal to or larger than about the height at which the rotary axes of the wheels are located in the horizontal position of the device and in the position of the steerable wheels in which they are parallel to the longitudinal axis of the tractor. By driving the steerable wheels the tractor can be advantageously employed under various conditions. The location of the front axle at a distance above the ground equal to or larger tnan the height of the rotary axes of the wheels permits of advantageously using the tractor also on uneven soil, since obstacles lying on the ground cannot damage the tractor. Owing to the high location of the front axle the tractor can be advantageously used on fields where the crop has already attained a given height, without the crop being damaged by the tractor. If mown crop or the like is lying on the ground the tractor can pass over it without the crop being engaged by the front axle of the tractor.

In a further embodiment of a tractor or a similar vehicle, particularly intended for use in agriculture, comprising a steerable wheel adapted to be turned about a swivel shaft, the swivel shaft is at an angle to a vertical plane in the horizontal position of the tractor - in a front view - and two drivable wheels are arranged on a swivel shaft. Owing to the inclined position of the swivel shaft the two wheels coupled with the swivel shaft will be steered so that one of the wheels gets at a higher level than the other wheel. Thus when the two wheels are driven, the ground surface will not be damaged, since one of the wheels will be more or less free of the ground or will at least bear on the ground with lower pressure.

In a further embodiment of a tractor or a similar vehicle particularly intended for use in agriculture the front axle of the tractor is provided in accordance with the invention with driven wheels said front axle being located at a
larger distance above the ground than the underside of the
differential gear of the rear axle of the tractor. Therefore,
it is possible to arrange a power take-off shaft on the front
side of the tractor which is located at a lower level than
the front axle. In this position of the power take-off shaft
lower than the front axle, the power take-off shaft can be
advantageously  used for driving implements coupled with
the front side of the tractor.

In a tractor or a similar vehicle particularly intended for use in agriculture in accordance with the invention
the support of the front axle is located near the front end
of the engine and the wheels arranged on the front axle are
steerable wheels, whilst the front axle comprises two power
take-off shafts capable of driving implements coupled with
the tractor, whilst a lifting device is arranged on the
front axle. Implements attached to the front side of the tractor can thus be advantageously driven by the power take-
off shafts. The implements can be coupled with the lifting
device in a simple manner. The support of the front axle
constitutes a satisfactory construction to carry the
implements at the front of the tractor. Owing to the connection of the lifting device with the front axle the implements
coupled with the lifting device will maintain the desired
position with respect to the front axle.

The invention will be described more fully with
reference to the drawings of two embodiments.

Fig. 1 is a side elevation of a tractor embodying
the invention.

Fig. 2 is a plan view of the tractor of Fig. 1.

Fig. 3 shows on an enlarged scale part of the driving
and steering of the steerable front wheels of the tractor
shown in Figs. 1 and 2.

Fig. 4 is an enlarged front view of the drive and
steering of the front wheels.

Fig. 5 is an elevational view of the parts shown

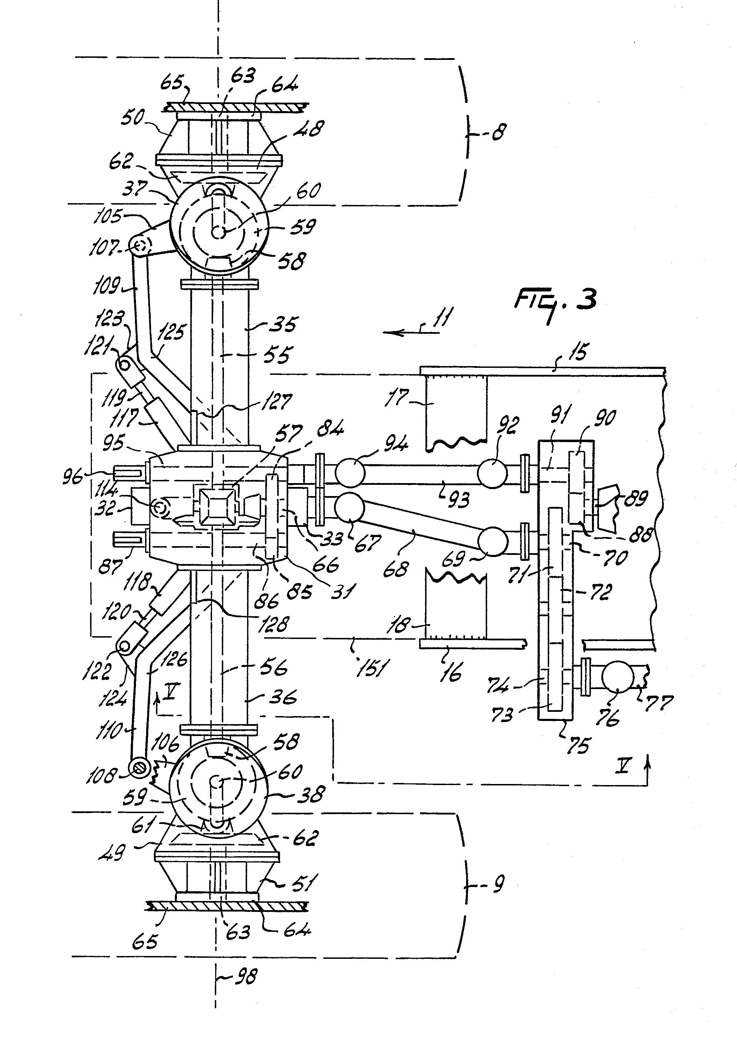

in Fig. 3 taken on the line V-V in Fig. 3.

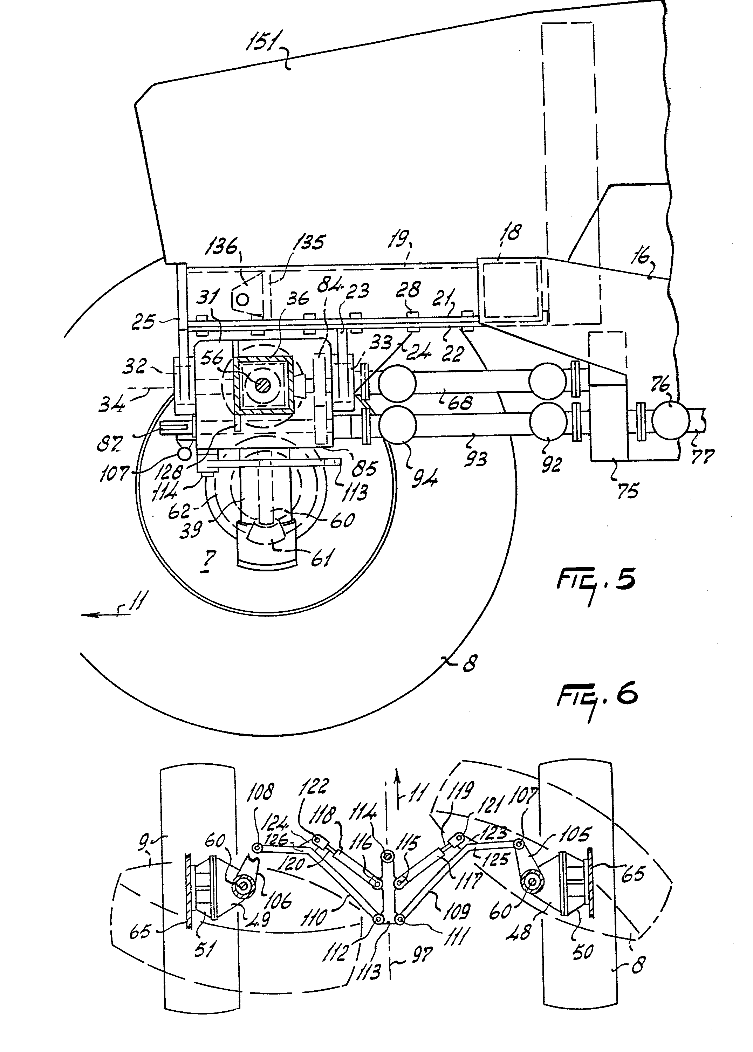

Fig. 6 is a plan view of the steering members for the front wheels.

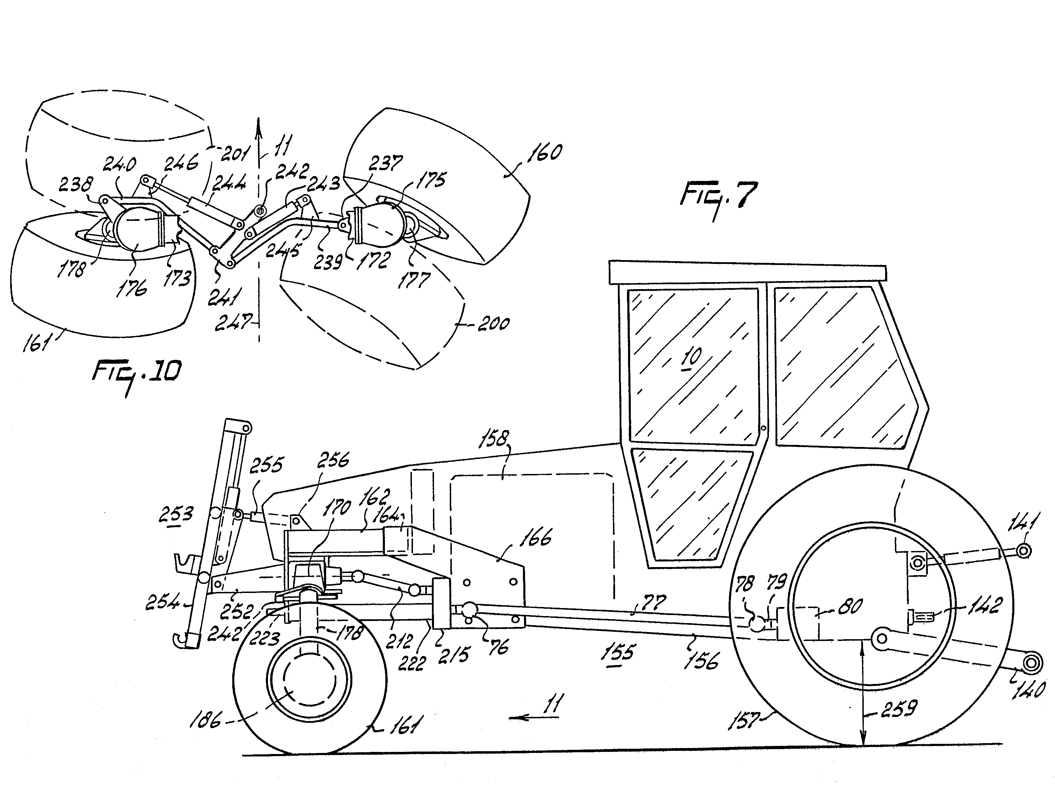

Fig. 7 is a side elevation of a second embodiment of a tractor in accordance with the invention.

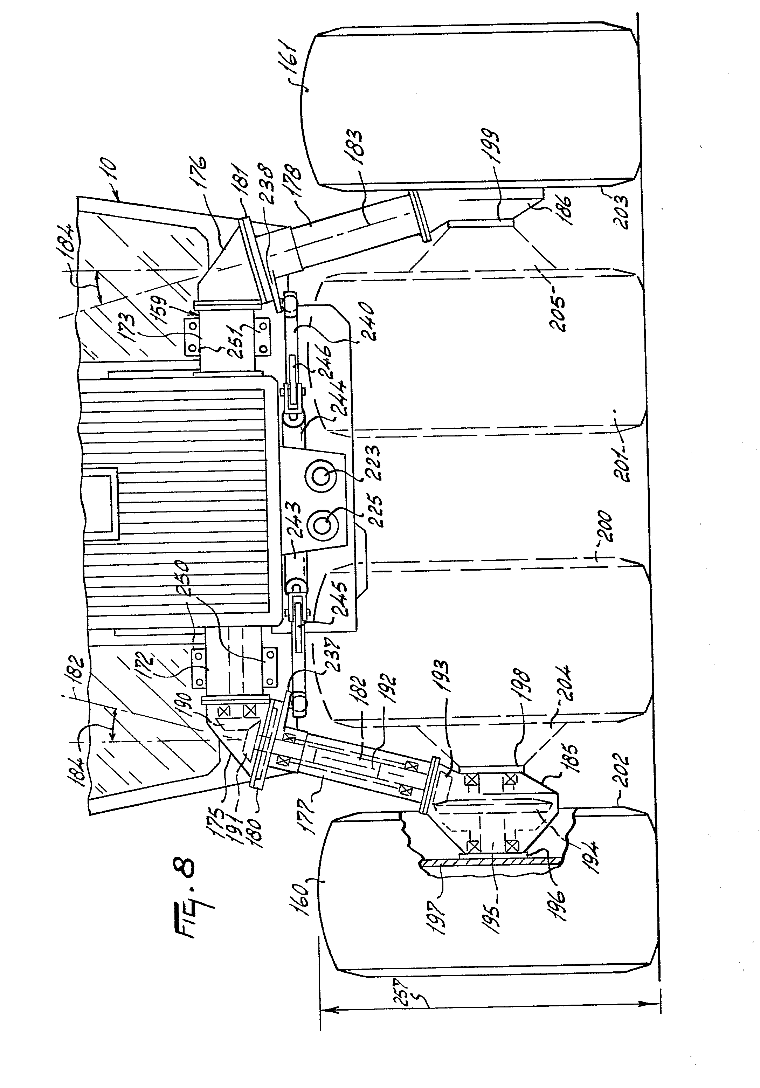

Fig. 8 is an enlarged front view of the tractor shown in Fig. 7, the lifting device at the front of the tractor shown in FIg. 7 being omitted.

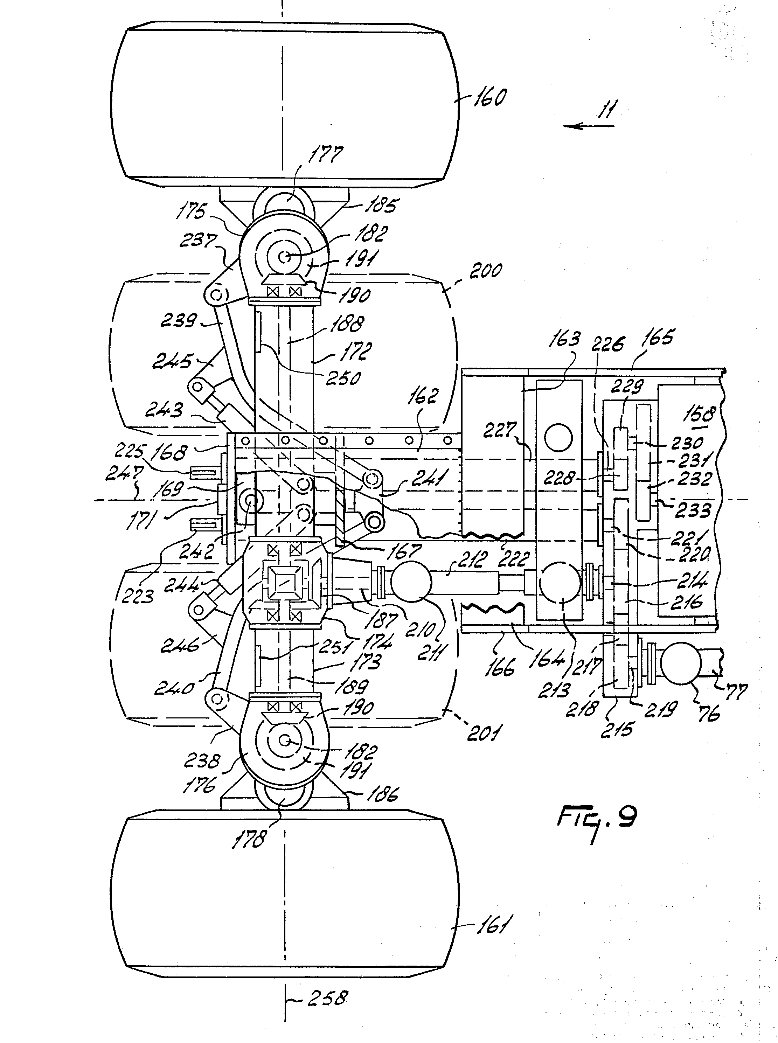

Fig. 9 is a plan view of the drive of the steerable front wheels of the tractor of FIg. 7 taken on the line IX-IX in FIg. 7.

Fig. 10 shows the steering members of the front wheels in a turned position.

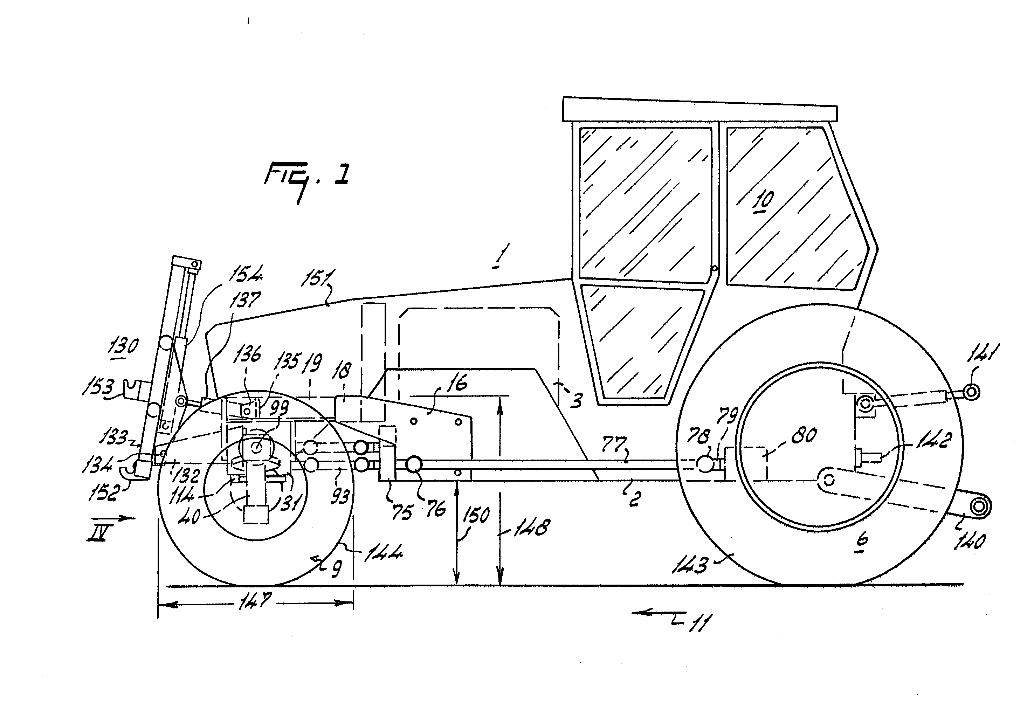

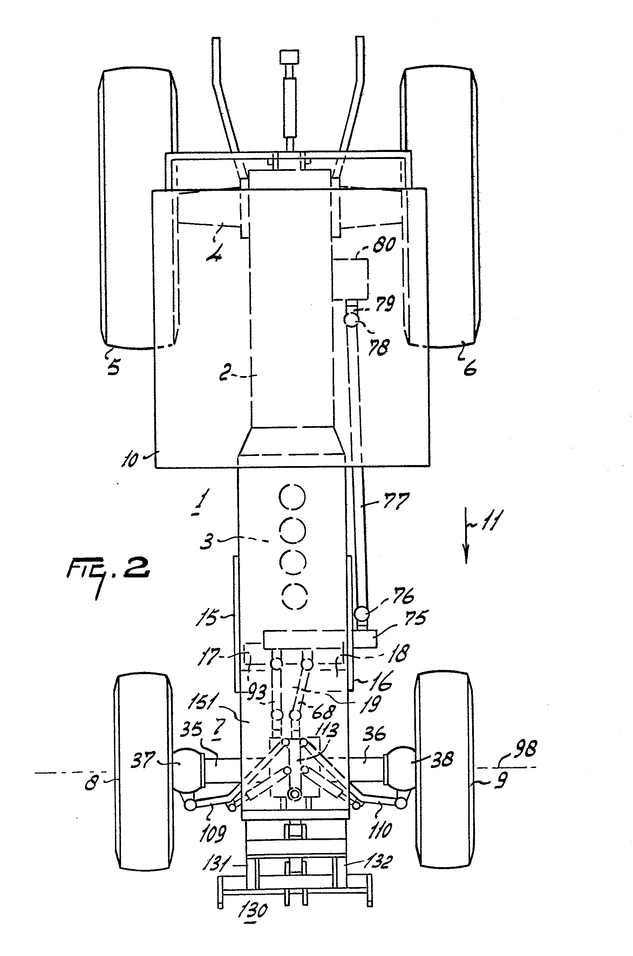

The tractor 1 shown in Figs. 1 to 6 comprises a frame 2 on which an engine 3 is arranged. On the frame 2 is arranged a rear axle 4 with rear wheels 5 and 6. On the front side of the tractor, viewed with respect to the normal direction of movement 11 there is arranged a front wheel axle 7 with front wheels 8 and 9. Above the rear axle 4 and between the wheels 5 and 6 the tractor has a cabin 10.

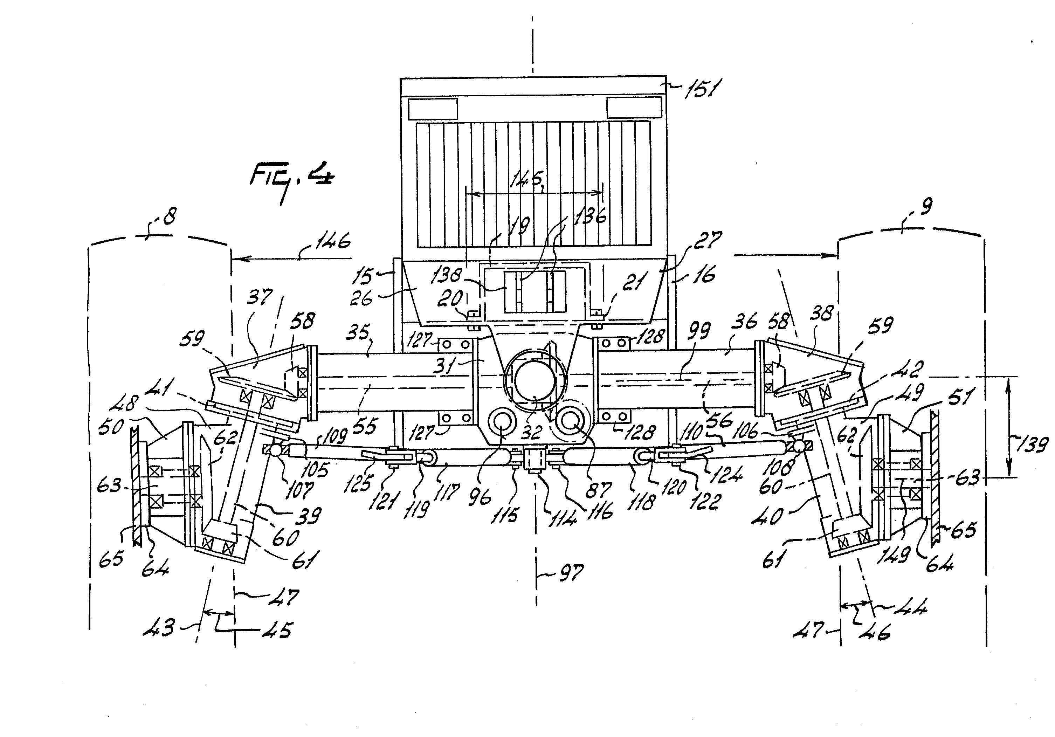

Near the front side, on both sides of the engine block 3, the frame is provided with side plates 15 and 16. Between these plates are fastened side arms 17 and 18 of a carrying beam 19. The carrying beam 19 constitutes a support for the front wheel axle 7. The carrying beam 19 has a vertical section in the shape of a U, the limbs being directed downwards and being provided on the underside with protruding side rims 20 and 21 (Fig. 4). The underside of the carrying beam 19 is provided with a coupling plate 22 covering the whole length of the carrying beam 19 and being fatened by bolts 28 to the side rims 20 and 21. Approximately midway the length the oupling plate 22 is provided with a bearing support 23. The connection of the support 23 with the plate 24 is reinforced by plate-shaped struts 24. Near the front side the coupling plate 22 is provided with a bearing support 25. The bearing support 25 extends as far as above the coupling plate 22 and has two side ears 26 and 27 one on each side of the support.

Between the bearing supports 23 and 25 is arranged a differential housing 31. The differential housing 31 is provided with stub shafts 32 and 33 journalled in the bearing supports 23 and 25. The differential housing is pivotable about a pivotal shaft 34 extending in the direction of length of the tractor and being located, viewed on plan, at the middle of the tractor. On both sides of the differential housing 31 are arranged hollow beams 35 and 36 provided at their ends with carrying casings 37 and 38 forming gear boxes. The differential housing, the holllow beams 35 and 36 and the carrying casings 37 and 38 fastened thereto are fastened to one another to form a rigid assembly and together they constitute  the front axle 7. On the underside of the carrying casings 37 and 38 swivel shafts 39 and 40 are rotatably fastened for the front wheels 8 and 9. The swivel shafts 39 and 40 are rotatable journalled in carrying rims 41 and 42 of the carrying casings 37 and 38. The swivel shafts 39 and 40 are arranged in inclined positions and are rotatable about the centre lines 43 and 44. These centre lines are at angles 45 and 46 of about 15° at the vertical plane 47, which is perpendicular to the ground – in the horizontal position of the tractor and is parallel to the direction of movement 11 of the tractor. The plane 47 shown goes through the inner sides of the wheels 8 and 9, which are then parallel to the direction of movement 11. The swivel shafts 39 and 40 comprise  gear wheel housings 48 and 49 in which conical carriers 50 and 51 are arranged.

The hollow beams 35 and 36 accomodate shafts 55 and 56 adjoining a differential gear 57 in the differential housing 31. At the end remote from the differential housing 57 the shaft 55 is provided with a bevel gear wheel 58 located in the casing 37 and co-operating with a bevel gear wheel 59 also located in the casing 37. The bevel gear wheel 59 is rigidly secured to the top end of a shaft 60, the centre line of which coincides with the centre line 43 of the swivel shaft 39. The top end of the shaft 60 is journalled in the casing 37 and the lower end is journalled in the lower end of the hollow swivel shaft 39 in the bearing housing 48. To the lower end of the shaft 60 is rigidly secured a bevel gear wheel 61, which co-operates with a bevel gear wheel 62 located in the housing 48. The gear wheel 62 is rigidly secured to a shaft 63 journalled in the carrier 50. The shaft 62 has a fastening plate 64, to which the hub 65 of the wheel 8 is fastened. In a similar manner the shaft 56 is coupled with the wheel 9, which is not shown in detail. whilst corresponding parts are designated by the same reference numerals.

The differential housing 31 has an input shaft 66 which is connected on the rear side of the differential housing viewed with respect to the direction of movement 11 by means of a universal joint 67 with an intermediate shaft 68. The intermediate shaft 68 is coupled by means of the universal joint 69 with a shaft 70 journalled in a gear box 75 and carrying a spur gear wheel 71. The gear box 75 is arranged near the front side of the engine block 3 and fastened between and to the side plates 15 and 16, the universal joint being located in front of the gear box 75. The spur gear wheel 71 is is mesh by means of a spur gear wheel 72 with a spur gear wheel 73 arranged on a driving shaft 74. The driving shaft 74 is connected on the rear side of the gear box 75, viewed with respect to the direction of movement 11, by means of a universal joint 76 with a lateral driving shaft 77. The lateral driving shaft 77 is located on one side of the frame 2 of the tractor and is coupled near the rear side of the frame by means of the universal joint 78 with a shaft 79 of a driving casing 80.

The driving casing 80 is coupled in a manner not shwon with the driving shaft by shwich the rear wheels 5 and 6 are driven by means of a differential gear in the rear axle 4. This driving shaft, from which the drive in the driving casing 80 is driven, is located after the deceleration casing through which the driving shaft is driven by the engine.

In the differential housing 31 the shfat 66 is provided with a gear wheel 84 co-operating with a gear wheel 85 in the differential housing. The gear wheel 85 is fastened to a power take-off shaft 86 journalled in the differential housing. The front end 87 of the power take-off shaft 86 protrudes from the front side of the differential housing and constitutes a coupling end of the power take-off shaft

0110474

86.

In the gear box 75 a gear wheel 88 is arranged on a shaft 89 connected with the engine shaft of the engine 3. The gear wheel 88 is in mesh with a gear wheel 90 arranged on a shaft 91 journalled in the gear box 75. The shaft 91 is coupled at the front of the gear box 75 by means of a universal joint 92 with an intermediate shaft 93. The intermediate shaft 93 is coupled by means of a universal joint 94 on the rear side of the differential housing 31 with a power take-off shaft 95 journalled in the differential housing 31. The front end 96 of the power take-off shaft 95 protrudes from the front side of the differential housing 31 and constitutes the coupling end of the power take-off shaft 95. It is particularly shown in Figs. 3 and 4 that the power take-off shafts 86 and 95 are located in the lower side of the differential housing 31 at a level just below the hollow beams 35 and 36. The power take-off shafts 86 and 95 are located on both sides of the plane 96 going through the longitudinal centre line of the tractor. The differential housing 31 is located in the middle of the front wheel axle 7, whilst the centre line of the shaft 66 and that of the differential gear 57 are located in the plane 97. The centre lines of the shafts 55 and 56 as well as the centre lines 43 and 44 of the swivel shafts 39 and 40 are located in a transverse plane 98, which is normal to the longitudinal plane 97. The swivel shafts 39 and 40 are diverging in downward direction.

The front wheels 8 and 9 are steerable wheels, for which purpose they are adapted to turn about the pivotal shafts 43 and 44. For this purpose the top ends of the swivel shafts 39 and 40 have rigidly secured to them steering arms 105 and 106. The steering arms 105 and 106 are connected by means of pivotal shaft 107 and 108 with steering rods 109 and 110. The steering rods 109 and 110 are coupled through pivotal shafts 111 and 112 with a steering rod carrier 113. The pivotal shafts 111 and 112 are located near one end of the steering rod carrier 113. The other end of the steering rod carrier 113 is pivotable about a pivotal shaft 114 and coupled with the differential housing 31.

Approximately midway the length of the steering rod carrier 113 steering cylinders 117 and 118 are coupled on both sides by means of pivotal shafts 115 and 116. The steering cylinders 117 and 118 hold piston rods 119 and 120, which are coupled through pivotal shafts 121 and 122 with ears 123 and 124 fastened to the steering rods 109 and 110. The ears 123 and 124 are secured to the steering rods 109 and 110 near bent parts 125 and 126 thereof. Although in this embodiment the steering cylinders 117 and 118 are coupled with the steering rod carrier 113 whereas the piston rods of said cylinders are coupled with the rods, it will be obvious that conversely the cylinders may be coupled with the steering rods, whereas the piston rods are connected with the steering rod carrier. The cylinders 118 and 118 with their piston rods 119 and 120 constitute variable steering rods. The cylinders 117 and 118 are connected in a manner not shown through ducts with hydraulic members actuable by means of the steering wheel of the tractor. In the position shown in Fig. 6, in which the wheels 8 and 9 are parallel to the longitudinal plane 97 of the tractor, the assembly of the mechanism connected with the swivel shafts 39 and 40 is located for steering purposes symmetrically to the plane 97.

On the front side of the device is arranged a lifting device 130. This lifting device is partly fastened to the front axle 7. To this end the hollow beams 35 and 36 of the front axle 7 are provided with fasteneing ears 127 and 128 respectively located one on each side of the differential housing 31. The lifting device 130 comprises two fastening arms 131 and 132, by which it is fastened to the ears 127 and 128. The lifting device comprises an upwardly extending lifting part 133, which is connected through pivotal shafts 134 with the arms 131 and 132. The part 133 has coupling pins 152 and 153 located at different heights and being in common movable and adjustable in a direction of height by a hydraulic ram 154. The lifting device 130 is furthermore supported by the carrying beam 19, for which purpose the latter is provided with a fastening plate 135 having ears 136. Between the ears 136 and the rear side of the lifting part 133 is arranged a coupling member 137 hydraulically adjustable in its direction of length. For fastening the coupling member 137 to the ears 136 the plate 25 has an opening 138 through which the coupling member 138 can pass.

On the rear side the tractor is provided with a three-point lifting device comprising lifting arms 140 and a top rod 141. On the rear side the tractor 1 is furthermore provided with a power take-off shaft 142.

The wheels of the tractor are preferably provided with low pressure tyres, for example, the tyres 143 of the rar wheels and the tyres 144 of the front wheels.

The tractor 1 according to the invention can be advantageously employed under various conditions and for all kinds of purposes. In particular the tractor can be used as an grincultural tractor in which case it can carry and/or move one or more agricultural implements. Particularly when used as an agricultural tractor it is advantageous that the wheels are provided with low-pressure tyres. The tractor wheels will then penetrate less in the soil so that the damage to the soil is minimized.

Since two power take-off shafts 86 and 95 are provided on the front side of the device, implements attached to the front side of the tractor can be readily driven. The implements can be driven so that they are actuated in dependence on the travelling speed of the tractor. To this end the implements are driven by the power take-off shaft 86. This power take-off shaft has a speed of rotation depending on the travelling speed of the device. For this purpose the power take-off shaft 86 is driven from the shaft 77 extending along the side of the tractor and being driven through the driving casing 80 by the shaft driving the rear wheels 5 and 6. The shaft 77 also drives the front wheels 8 and 9 through the transmission members 71, 72 73 in the gear box 75 and through the shaft 66 and the shafts 55 and 56. Owing to the drive of the rear wheels 5 and 6 as well as of the front wheels 8 and 9 the wheels have a satisfactory grip on the ground to propel the tractor with the implements coupled herewith. Since the four wheels are driven, the pressure of each wheel on the ground need not be heavy, whilst nevertheless a satisfactory travel of the tractor is ensured even under unfavourable conditions.

Implements attached to the front side of the device may also be driven from the power take-off shaft 95. The power take-off shaft 95 is driven in dependence on the speed of rotation of the engine. Through the shaft 96 it is thus possible to drive implements requiring a drive independent of the travelling speed of the tractor. The places of the ends 87 and 96 of the power take-off shafts just below the front axle are advantageous for driving the attached implements.

For attaching implements to the front side of the tractor it is advantageous to use the fastening plates 127 and 128 on the front axle 7.

In the embodiment shown the coupling plates 127 and 128 and the fastening plates 135 have attached to them a lifting device 130, with which implements can be coupled. The position of the part 133 of the lifting device can be varied by turning it around the pivotal shaft 134. For this purpose the hydraulically actuable support 137 can be varied in length. The implements can also be directly coupled with the fastening plates 127 and 128 and/or 135. Fastening the implements to the coupling plates 127 and 128 and hence to the front axle 7 has the advantage that the implements will remain in the correct position relative to the front axle 7 with the front wheels 8 and 9. When, for example, due to unevenness of the ground the front wheels 8 and 9 move upwards with respect to the tractor frame by a turn of the front axle 7 about the pivotal shaft 34, the implements coupled with the front axle 7 will maintain their correct position relative to the front axle.

Implements can also be attached on the rear side of the tractor, for example, to the lifting arms 140 and the top rod 141. On the rear side of the tractor implements can be coupled for example with the lifting arms 140 and the top rod 141. Implements attached to the rear side of the tractor can be driven by the power take-off shaft 142. By means of the two power take-off shafts 86 and 95 on the front side of the tractor and the power take-off shaft 142 on the rear side of the tractor implements can be coupled and driven in practically any desired manner. Moreover, several implements coupled with the tractor can be driven simultaneously. In this way the work to be done by the implements coupled with the tractor will be most effective.

In the mode of fastening of the front wheels to the tractor and of the drive thereof as described the front wheels can be largely deflected about the pivotal shafts 43 and 44. The wheels 8 and 9 can be moved into a position as shown in broken lines in Fig. 6. The front wheels 8 and 9 have to be turned to an extent such that the tractor can make a curve the centre of which is located near one of the rear wheels. The wheels 8 and 9 can turn to a large extent about the swivel shafts without being jammed on parts of the tractor. For this purpose the carrying beam 19 has a width 145 which is small as compared with the width of the tractor. For this purpose the superstructure of the tractor 151 is located entirely above the carrying beam 19. The width 145 of the beam 19, measured along the protruding side rims 20 and 21 is only about one quarter of the distance 146 between the front wheels 8 and 9. The diameter 147 of the front wheels is approximately equal to the distance 148 between the top side of the beam 19 and the ground measured in the horizontal position of the tractor. The diameter 147 is about five to six times the distance 145. The front wheels 8 and 9 can thus turn through almost 90° about their pivotal shafts 43 and 44 respectively without striking parts of the tractor. The wheels 8 and 9 preferably have a diameter 147 of about 120 cms. The wheels will, therefore, have a satisfactory adhesion to the ground to operate as a driven wheel. Moreover, the front wheels can carry a heavy weight without damaging the soil by deep tracks. The large angle of turn of the wheels 8 and 9 about the pivotal shafts 43 and 44 is also obtained by means of the steering members shown in detail in Fig. 6. The wheels can be steered by varying the length of the steering members 117, 119 and 118, 120 respectively. The wheels can be moved, for example, into the position indicated by broken lines in Fig. 6 by enlarging the length of the steering member 118, 120, that is to say, the distance between the pivotal shafts 116 and 122. FOr this purpose pressurized fluid in introduced into the cylinder 118. The steering rod will turn with respect to the steering arm 106 and the steering rod carrier 113, whilst the steering rod carrier 113 turns, in addition, about its pivotal shaft 114. Also owing to this construction of the steering members a large deflection of the front wheels can be obtained. The front wheels 8 and 9 can be designated as driven wheels. Each of the wheels is driven through the shafts 60, the centre lines of which coincide with the pivotal shafts 43 and 44. The two hydraulic steering members 117, 119 and 119, 120 reduce the frictional resistance in the hinges between the various parts. The tractor can, therefore, be manoeuvered in a satisfactory manner, whilst the wheels continue running substantially without slipping, which would damage the ground. This may be particularly important when the tractor is equipped with agricultural implements to carry out different work on the land. The short radius of turn of the tractor is particularly advantageous when the tractor with the agricultural implements coupled herewith has to be turned on the head land of the fields to be worked. The drive of the steerable front wheels by the shafts 55 and 56 with the bevel gear wheels 58, 59, the shaft 60 and the gear wheels 61 and 62 ensure a quiet, smooth drive of the steerable wheels in any position about their shafts 43 and 44 respectively. For the large deflection of the front wheels about their pivotal shafts 43 and 44 it is advantageous that the members 105 to 114 are located below the front axle 7 as will be apparant from Fig. 4. In the position of the wheels parallel to the longitudinal plane 97 the rotary axes 149 of the front wheels are located lower than the steering rods 109 and 110 and the steering cylinders 117 and 118. The free height below the tractor is preferably not less than 60 to 70 cms. Therefore, when travelling on uneven ground the bottom side of the tractor can practically not be damaged. Moreover, crop standing on the field will not be damaged by the tractor. This free height 150 has furthermore the advantage that crop lying on the ground, for example, a swath of mown crop will not stick to the bottom side of the tractor. In this respect it is furthermore advantageous that the centre line 99 of the front axle 7 is located at least about 25 cms higher than the rotary axes.

The construction in which the steerable front wheels are driven by shafts with gear wheels and in which the power take-off  shafts 86 and 95 are located in the differential housing 31 and the steering rods 107 and 108 with their steering members 117, 119 and 118, 120 respectively are located below the front axle 7 permits of designing a compact, yet simple structure. With this design the construction has a long lifetime. The design of the wheel drive is preferably such that the tractor can travel in the normal direction of movement 11 as well as in the reverse direction.

The front axle 7 is located at a higher level than the middle of the front wheels but lower than the top side of said wheels. In this way an advantageous location of the driving and steering parts is obtained for the wheels. The tractor can, therefore, travel satisfactorily on uneven ground without the risk of parts striking the ground.

Since the side ears 26 and 27 of the bearing support 25 are located in front of the plane 98 these members will not hinder the turn of the front wheels through a large angle about the pivotal shafts 43 and 44 respectively.

The front side 151 of the superstructure of the tractor adjoins the top side of the carrying beam 19. The superstructure is thus located at the distance 148 above the ground, which is almost equal to the diameter 147 of the wheels. The superstructure 151 does, therefore, not hinder the turn of the wheels about their pivotal shafts 43 and 44.

The short radius of turn of the tractor is readily allowed  by the driven front wheels. Since the four wheels are driven, slip is practically excluded in making short turns. The large deflections of the front wheels about the shafts 43 and 44 are enabled, in particular because

0110474

the front wheel drive does not comprise universal joins located near the wheels.

The housings 48 and 49 formed on the swivel shafts 39 and 40 have their lower ends located within the inner side faces 47 of the wheels. They are thus satisfactorily protected against obstacles encountered by the tractor. The housings 48 and 49 do practically not hinder the travel of the tractor on land having emerging crop.

Figs. 7 to 10 show a second embodiment of a tractor in accordance with the invention. This tractor 155 comprises a frame 156 and rear wheels 157. In the frame 156 is arranged an engine 158. The frame 156 is carried at the front by a front axle 159. The front axle 159 is provided with front wheels 160 and 161. The front axle 159 is fastened to a carrying beam 162, which is secured by means of side arms 163 and 164 to side plates 165 and 166. The side plates 165 and 166 are fastened one on each side of the frame 156. In the same manner as indicated in the preceding embodiment the front axle 159 is arranged between two bearing supports 167 and 168 fastened to the carrying beam 162. Between the supports 167 and 168 bearing 169 are fit to the front axle 159. The front axle with the bearing 169 is adapted to turn about stub shafts fastened to the bearing supports so that the front axle can turn about a pivotal shaft 170.

The front axle 159 comprises hollow beams 172 and 173 arranged one on each side of a differential housing 174. The differential housing 174 is located beyond the middle of the front axis and the beam 172 is longer than the beam 173. At the ends remote from the differential housing 174 the hollow beams 172 and 173 are provided with gear boxes 175 and 176. On the gear boxes 175 and 176 are arranged swivel shafts 177 and 178. The top ends of these swivel shafts are rotatably journalled in carrying rims 180 and 181 of the gear wheel housings 175 and 176. The swivel shafts 177 and 178 are rotatable about their centre lines 182 and 183, which constitute the pivotal axes about which the wheels van turn in steering. The swivel shafts 177 and 178 are downwardly inclined from the front wheel

0110474

axle 159 so that these swivel shafts are downwardly diverging. The centre lines 182 and 183 are at angles of about 15° to a vertical plane extending in the direction of movement 11 of the tractor. At the lower ends of the swivel shafts 177 and 178 are arranged gear wheel housings 185 and 186 carrying the wheels 160 and 161.

The differential housing 174 comprises a differential gear 187 with which are connected shafts 188 and 189 located in the hollow beams 172 and 173. The shafts 188 is drivably coupled by means of bevel gear wheels 190 and 191 in the bearing housing 175 with a driving shaft 192 journalled in the swivel shaft. The shaft 192 is coupled by means of a bevel gear wheel 193 in the housing 185 with a bevel gear wheel 194 on a shaft 195. The shaft 195 is journalled in the housing 185 and has a fastening plate 196 to which the rim 197 of the wheel 160 can be fastened In the same manner as described for the wheel 160 the shaft 189 is drivably coupled by means of bevel gear wheels in the housings 176 and 186 with the wheel 161. The wheel axles 195 are provided at their proximal ends with fastening plates 198 and 199 to which - if desired - wheels 200 and 201 can be releasably fastened.

The housings 185 and 186 are arranged so that they are located for a large part inside the wheel sides 202 and 203. The wheels 200 and 201 are provided with fastening cones 204 and 205 respectively, by which they can be secured to the fastening plates 198 and 199.

The differential gear 174 comprises a driving shaft 210, which is coupled through a universal joint 211 located behind the differential housing, viewed with respect to the direction of movement 11, with an intermediate shaft 212, which is coupled through a universal joint 213 with a driving shaft 214. The shaft 214 is journalled in a gear box 215 arranged near the front side of the engine 158 and having its long sides extending transversely of the direction of movement 11. The shaft 214 is coupled in the gear box with a gear wheel 215, which is coupled through a gear wheel 217 with a gear wheel 218. The gear wheel 218 is fastened to a shaft 219, which is coupled in the same manner as in the preceding embodiment through a universal joint with the driving shaft 77 extending along the side of the engine 158 and the frame 156. The driving shaft 77 is coupled in the same manner as in the preceding embodiment with the shaft through which the rear wheels 157 are driven. The gear wheel 216 is coupled with a gear wheel 220 on a shaft 221 journalled in the gear box 215. The shaft 221 extends on the front side of the gear box 215 in a cylinder 222 arranged between the gear box 215 and the bearing support 165. The shaft 221 constitutes a power take-off shaft provided at the front with a coupling stub 223, which projects in front of the bearing support 165. At the front of the bearing supports 165 protrudes furthermore a coupling end 225 of a second power take-off shaft 226. The shaft 226 is also journalled in a cylinder 227 arranged between the bearing support 165 and the gear box 215. The power take-off shaft 226 is provided with a gear wheel 228 being in mesh with a gear wheel 229 on a shaft 230 journalled in the gear box. 215. The shaft 230 has a further gear wheel 231 coupled with a gear wheel 232 on a shaft 233. The shaft 233 is coupled with the engine shaft, which is not shown in detail.

The power take-off shafts 221 and 226 are located below the front axle 159. The front axle 159 is a rigid front axle comprising the differential housing 174, the hollow beams 172 and 173 and the bearing housings 175 and 176. The power take-off shafts 221 and 226 with their coupling ends 223 and 225 occupy a fixed position with respect to the frame 156 of the tractor.

The steering of the wheels arranged on the swivel shafts 177 and 178 is essentially performed in the same manner as described for the preceding embodiment. The steering mechanism of the second embodiment need, therefore, not be described in full detail.

In this embodiment the swivel shafts 177 and 178 are provided with steering arms 237 and 238 arranged at the top ends of the swivel shafts near the carrying rims 180 and 181. The steering arms 237 and 238 are at right angles to the pivotal shafts 182 and 183. The steering arms 237 and 238 are pivotally coupled with the steering rods 239

- 16 -                    0110474

and 240. The steering rods 239 and 240 are pivotally coupled with the end of a steering rod carrier 241, the front end of which is pivotable about a pivotal shaft 242 arranged in the tractor frame. Between the steering rod carrier 241 and the steering rods are arranged steering members 243 and 244 formed by hydraulically actuable cylinders with piston rods. These steering members are coupled with fastening ears 245 and 246 of the steering rods arranged near bent parts thereof. The steering rods 239 and 240 are located at the same level as the steering rods 243 and 244, whilst - like in the preceding embodiment - the steering members are located in front of the steering rods.

The hydraulically actuable steering members are coupled through ducts (not shown) with the steering wheel of the tractor. In the position of the front wheels 160 and 161 parallel to the longitudinal plane of the device the steering members are symmetrical to the central plane 247 of the tractor. The power take-off shafts 221 and 226 are also symmetrical to said plane. The driving shafts 212 and the differential housing 174 are asymmetrical to said plane.

In this embodiment the front axle is provided with ears 250 and 251 to which fastening arms 252 of a lifting device 253 can be fastened. The upwardly extending part 254 of the lifting device is coupled by means of a coupling member 255 with a tongue 256 on the top side of the carrying beam 162. The coupling arm 255, like the coupling arm 137 of the first embodiment, is adjustable in its direction of length since it is formed by a hydraulic ram with a piston rod, which is connected in a manner not shown through ducts with the hydraulic system of the tractor.

Like in the preceding embodiment the tractor is provided on the rear side with a lifting device having a top rod 141 and lifting arms 140. Like in the preceding embodiment a power take-off shaft 142 is provided on the rear side of the tractor. These corresponding parts are designated by the same reference numerals.

Like in the preceding embodiment the tractor in this embodiment is perfectly suitable for use for all kinds of work. The tractor is particularly suitable for use in agriculture, since both on the front side and on the rear side implements can be attached. These implements can be driven - if necessary - by the power take-off shaft 142 on the rear side of the tractor and the power take-off shafts 221 or 226 on the front side of the tractor. On the front side of the tractor implements can be suspended to the lifting device 253. It is also possible to attach implements directly to the fastening ears 251 and 252 and to the tongue 256.

In this embodiment the front wheels have a diameter 257, which is smaller than the diameter of the front wheels of the preceding embodiment. The diameter 257 is in this embodiment about 90 cms. The front axle 159 in this embodiment is located at a higher level than the top side of the front wheels. The steering rods 239 and 240 as well as the steering members 243 and 244 are located below the front axle, but higher than the top side of the wheels 160 and 161 and the wheels 200 and 201, which may be connected with the former. Therefore, the front wheels can readily move below the front side of the tractor. The front wheels arranged on the swivel shafts 177 and 178 respectively can turn, like in the preceding embodiment, very far about the pivotal shafts 182 and 183 respectively. Therefore, this tractor can also turn with such a small radius that it turns about a centre located near one of the rear wheels of the tractor. Fig. 10 shows a turned position of the wheels. From this figure it is also apparent that the turn of the wheels about the swivel shafts 182 and 183 can be performed by varying the length of the steering members 243 and 244. The steering can be performed so that for obtaining the position shown in fig. 10 the steering member 244 is increased in length. Thus the position of the steering rods relative to the steering arm and the steering rod carrier is changed so that the steering rod carrier turns about the pivotal shaft 242. The non-actuated steering cylinder 243 has shortened its length by the pressure of the steering member 244 so that the steering rod 239 moves into the position shown in fig. 10. For travelling through a bend to the other side than that shown in fig. 10 the steering member 244 moves freely and becomes shorter since by the hydraulic pressure the distance of the steering member 243 between its fastening points on the steering rod carrier and the steering rod is lengthened. The wheels can be maintained in the steered position by holding the steering member concerned 243 or 244 in its position obtained for driving through a given bend.

Also in this embodiment the centre line of the front axle 259 with the pivotal shafts 182 and 183 is located in a vertical plane 258 normal to the central plane 247 of the tractor.

When each of the swivel shafts 177 and 178 have two front wheels, the proximal wheels 200 and 201 will move upwards during their turn about the inclined shafts 182 and 183 with respect to the swivel shaft, whilst the wheels 160 and 161 will move upwards out of the position shown in fig. 8. During the steering operation the outer wheels 160 and 161 will bear more heavily on the ground than the two inner wheels 200 and 201. Therefore steering of the two wheels can be readily performed on a single swivel shaft. When the four driven wheels 160, 200 and 161, 201 on the front axle 159 are used, the ground surface will, therefore, practically not be damaged when travelling through bends by wheels slipping on the ground surface.This isparticularly important on ploughed land. When the load of the tractor is such that it is not necessary or desirable to use four front wheels, the two proximal inner wheels 200 and 201 can be dispensed with. Since the bearing housings 185 and 186 are located for a large part within the side faces 202 and 203, the bearing housings 285 and 286 will – when the wheels 200 and 201 with their fastening cones 204 and 205 are removed – not form parts excessively protruding out of the inner side faces 202 and 203 of the front wheels 160 and 161. Therefore, the bearing housings 185 and 186 are practically not exposed to a risk of damage by obstacles lying on the ground. Moreover, when the tractor is used in agriculture, the bearing housings 185 and 186 will practically not damage crop emerging from the ground, when the tractor is employed, for example, in row cultures. Moreover, crop lying on the ground, for example  hay will practically not come into contact with these bearing housings. Important in this case is also the high position of the front axle 159. The high position of the front axle 159 is furthermore advantageous for mounting the wheels 200 and 201 .

From fig. 8 it will be apparent that the coupling ends 223 and 225 of the power take-off shafts are located near one another in the middle of the tractor and between the wheels. The power take-off shafts are located at a heihgt approximately equal to that of the front wheels. Since these power take-off shafts are located in the middle of the tractor they do not constitute an obstancle for the steerable wheels when the tractor is turning through very sharps bends.

Like in the preceding embodiment one of the power take-off shafts on the front side of the tractor i.e. the shafts 225 and 226 can be rotated in dependence on the rotation of the engine shaft whereas the other power take-off shaft 221, 223 rotates with a speed depending on the travelling speed of the tractor in the manner as described for the preceding embodiment. The two power take-off shafts 221, 223 and 225, 226 may be used at will for driving implements attached to the tractor.

In this embodiment the rear axle of the tractor is located at a height 258 above the ground. This free space is smaller than the free space below the front axle 259. The space 258 is preferably about 10 cms smaller than the height of the free space below the front axle 159.

The invention is not limited to the foregoing statements but also encompasses what is shown in the drawings, which is apparent therefrom and may not have been described.


- C l a i m s -

Claims:

1. A tractor or a similar vehicle particularly intended for use in agriculture, comprising a front axle with two steerable wheels characterized in that the front axle (7) comprises driving means (55 to 57) for driving the two steerable wheels (8 and 9) and in that the front axle is located at a distance above the ground which is at least substantially equal to or larger than the height at which the rotary axes (149) of the wheels are located in the horizontal position of the device and in the position of the steerable wheels in which they are parallel to the longitudinal axis of the tractor.

2. A tractor as claimed in claim 1 characterized in that the steering rods (109, 110) for the steerable front wheels (8, 9) are located at a lower level than the front axle.

3. A tractor as claimed in claim 1 or 2, characterized in that the front wheels are pivotable about a swivel shaft (60) which is at an angle to the vertical in the horizontal position of the tractor.

4. A tractor as claimed in anyone of the preceding claims chatacterized in that two driven wheels (160, 200) are arranged on the swivel shaft (177).

5. A tractor as claimed in claim 4 characterized in that the centre line(43, 44) of the swivel shaft (80) is located in a plane (98) which is at least substantially at right angles to the longitudinal axis of the tracotr, whilst in the horizontal position of the tractor the rotary axes (149) of the two wheels arranged on a swivel shaft are also located in said plane and extend horizontally in a position of the wheels parallel to the longitudinal axis of the tractor.

6. A tractor as claimed in claim 4 or 5, characterized in that at the front side of the tractor two swivel shafts (177, 178) are provided, each of them being provided with two driven wheels (160, 200, resp. 161, 201), one of the two wheels (200 resp. 201) arranged on a swivel shaft is releasably attached thereto.

7. A tractor as claimed in anyone of the preceding claims, characterized in that the front axle (7) is located

- 21 -

0110474

at a higher level than the underside of the differential gear of the rear wheel (5, 6) of the tractor.

8.    A tractor as claimed in anyone of the preceding claims chatacterized in that the front axle (7) is provided with a power take-off shaft (87, 96) for driving implements connected with the tractor.

9.    A tractor as claimed in anyone of the preceding claims characterized in that the support (19) for the front axle (7) is located near the front end of the tractor engine (3) and in that the front wheels (8, 9) are driven, steerable wheels, whilst the front axle comprises two power take-off (86, 96) shafts for driving implements coupled with the tractor and a lifting device (130) is arranged on the front axle.

10.    A tractor as claimed in anyone of the preceding claims characterized in that the front axle (7) is pivotable with respect to the tractor frame about a pivot axis (34) extending in the direction of length of the tractor.

11.    A tractor as claimed in claim 9 or 10 characterized in that the lifting device comprises coupling points (152, 153) adapted to be moved in a direction of height.

12.    A tractor as claimed in anyone of claims 9 to 11 characterized in that the lifting device is coupled with the support (19) for the front axle, whereby the connection (137) of the lifting device with the support for the front axle is hydraulically adjustable.

13.    A tractor as claimed in claim 8 or 12 characterized in that the front side of the tractor is provided with a power take-off (96) shaft which is rotatable with a speed depending on the engine speed and with a power take-off (87) shaft rotatable with a speed depending on the travelling speed of the tractor.

14.    A tractor as claimed in anyone of the preceding claims characterized in that the steerable wheels (8, 9) can be turned so that they can deflect in a manner such that the turning circle of the tractor has its centre located near a rear wheel (5, 6) of the tractor.

15.    A tractor as claimed in anyone of the preceding claims characterized in that the rear wheels of the tractor are larger than the front wheels having a diameter of about 120 cms.

16.    A tractor as claimed in anyone of the preceding claims characterized in that at least one wheel of the tractor is provided with a low-pressure tyre.

17.    A tractor as claimed in anyone of the preceding claims chatacterized in that the steerable front wheels are hydraulically steerable.

18.    A tractor as claimed in anyone of the preceding claims chatacterized in that near the top and lower end of the swivel shaft (60) provided with driven, steerable front wheels (8, 9) of the tractor there is arranged a gear box (37, 38, resp. 48, 49) having two bevel gear wheels (58, 59 reps. 61, 62) for driving the front wheels.

19.    A tractor as claimed in anyone of the preceding claims characterized in that on both sides on the rear end of the supporting beam (19) for the front axle there are arranged tubular side arms (17, 18) by which the front supporting beam is coupled with the tracotr frame.

20.    A tractor as claimed in anyone of the preceding claims characterized in that the tractor has an engine of a power of about 60 kW.

21.    A tractor as claimed in anyone of the preceding claims characterized in that the tractor has a drive such that it can be moved in two opposite directions.

22.    A tractor as described in the foregoing and as illustrated in the drawings.

-o-o-o-o-o-

0110474

Fig. 1

FIG.2

3/8

0110474

FIG. 3

FIG. 4

FIG. 5

FIG. 6

FIG.7

FIG.10

6/8

0110474

FIG. 8

0110474

FIG. 9

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 019 794  (PATENT CONCERN)<br><br>* description and figure 7 *<br><br>--- | 1-4,7,<br>9-11,<br>14,17-<br>22 | B 62 D   49/06<br>B 62 D   49/02<br>B 60 K   17/28 |
| X | FR-A-2 430 342  (SPENCE)<br>* the entire document *<br><br>----- | 1,4,14 | |

TECHNICAL FIELDS
SEARCHED (Int. Cl. ³)

B 62 D
B 60 K

The present search report has been drawn up for all claims

| Place of search | Date of completion of the search | Examiner |
|---|---|---|
| THE HAGUE | 02-03-1984 | SCHMAL R. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503. 03 82